# EUROPÄISCHE PATENTANMELDUNG

(11) **EP 0 860 924 A2**
(43) Veröffentlichungstag der Anmeldung: **26.08.1998**
(21) Anmeldenummer: 98101808.8
(22) Anmeldetag: 03.02.1998
(51) Int. Cl.: H02G 3/18

(54) **Kabeldurchführungseinrichtung**

(30) Priorität: 13.02.1997 CH 311/97
(71) Anmelder: LANZ OENSINGEN AG, 4702 Oensingen (CH)
(72) Erfinder: Fischer, Urs Viktor, 4614 Hägendorf (CH)
(74) Vertreter: Hotz, Klaus, Dipl.-El.-Ing./ETH

(57) **Zusammenfassung**

Kabeldurchführungseinrichtung (**10**), welche einen rechteckigen Rahmen (**12**) mit vertikalen Rahmenseitenwänden (**18**), aufweist, an welche sich oben nach aussen ragende Flansche (**20**) und unten eine nach innen ragende Auflageleiste (**22**) anschliesst, auf der ein Kabelführungselement (**14**) aufliegt. Der Rahmen ist durch eine Abdeckung (**16**) bedeckt.
Die Abdeckung (**16**) ist mittels einer Sperrvorrichtung (50) im Rahmen (12) lösbar befestigt und nach oben aus dem Rahmen (**12**) entfernbar ist, und/oder es ist ein weiteres Kabelführungselement (**14**) im Rahmen (**12**) aufgenommen.

## Beschreibung

Die Erfindung betrifft eine Kabeldurchführungseinrichtung nach dem Oberbegriff der Patentansprüche **1** bzw. **5** bzw. **7**.

Bei Doppelböden, die vorwiegend in Büro-, Verwaltungs-, Industrie- und Gewerbebauten eingebaut werden, sind im Hohlraum unter den die begehbaren Fussböden bildenden Doppelbodenplatten Leitungen verschiedenster Art, wie beispielsweise für die Stromversorgung, Telefon, Steuer- und Datenverbindungen für EDV usw. verlegt. Die Leitungen sind vielerorts mit im Hohlraum montierten Anschluss- bzw. Verteilkästen verbunden, bei denen über Steckdosen Kabel von Geräten oder sonstigen Einrichtungen angeschlossen werden können, die im Raum über dem Doppelboden stationiert sind. Diese Kabel laufen dabei durch Kabeldurchführungseinrichtungen, die nach Bedarf in einzelnen Doppelbodenplatten eingebaut sind. Solche Durchführungen sind oft nicht oder nicht voll mit Kabeln belegt, sondern auf Reserve für spätere Erweiterungen eingebaut. Sie müssen derart dimensioniert sein, dass ein bequemes Auswechseln und Durchziehen der Kabel mit montierten Steckern möglich ist.

Das **CH-Patentgesuch Nr. 01 654/94-0** beschreibt eine Kabeldurchführungseinrichtung, welche in eine vom Rand einer Doppelbodenplatte ausgehende Ausnehmung einsetzbar ist. Diese Kabeldurchführungeinrichtung umfasst einen Rahmen, ein darin eingesetztes Kabelführungselement und eine Abdeckung. Der Rahmen besteht vorzugsweise aus Metall, ist rechtwinklig und weist vertikale bzw. quer zur Oberfläche der Bodenplatte gerichtete Rahmenseitenwände auf. Diese sind oben nach aussen abgekröpft, wodurch ein umlaufender Flansch gebildet wird, mit welchem der Rahmen auf der bzw. den angrenzenden Bodenplatte(n) aufliegt. In diesen Rahmen ist ein vorzugsweise aus Kunststoff hergestelltes Kabelführungselement eingelegt, das sich längs einer der Rahmenseitenwände erstreckt und mehrere parallele Kabelführungsbahnen enthält, welche quer zur letztgenannten Rahmenseitenwand vom Inneren des Rahmens schräg nach aussen und oben gerichtet sind. Die Rahmenseitenwand, längs welcher das Kabelführungselement verläuft, ist unten in die Horizontale abgekröpft, so dass eine partielle Bodenfläche bzw. Auflageleiste gebildet wird, auf welcher das Kabelführungselement aufliegt. Die Abdeckung besteht im wesentlichen aus einer Metallplatte, welche oberhalb des Kabelführungselementes eine Ausnehmung besitzt, die durch Borsten einer an der Metallplatte befestigten Bürste überdeckt sind, wodurch ein kabeldurchlässiger Bereich der Abdeckung gebildet wird.

Diese vorbekannte Kabeldurchführungseinrichtung ist mit einem Nachteil behaftet, der darin besteht, dass keine Zugänglichkeit zu den Anschlüssen von oben her besteht, da die Abdeckung als Schieber gestaltet ist, der nur nach Wegnahme der benachbarten Bodenplatte horizontal entfernbar ist, und dass auch das Kabelführungselement nur seitlich in den Rahmen geschoben werden kann, so dass zum Umstecken von Verbindungen stets eine Doppelbodenplatte entfernt werden muss.

Die erste Aufgabe der Erfindung wird somit darin gesehen, eine Kabeldurchführungseinrichtung der eingangs genannten Art zu schaffen, welche eine Handhabung der Kabelanschlüsse ohne eine Wegnahme von Bodenplatten erlaubt.

Diese Aufgabe wird erfindungsgemäss durch die Merkmale des kennzeichnenden Teils des Patentanspruchs **1** gelöst, und vorteilhafte Weiterbildungen und Ausführungsbeispiele sind durch die abhängigen Patentansprüche **2** bis **4** definiert.

Die eingangs erwähnte vorbekannte Kabeldurchführungseinrichtung weist einen weiteren Nachteil auf: Die Kabel lassen sich nur ein einer Richtung hinausführen. Natürlich weisen die Kabel eine gewisse Flexibilität auf und können aus der Kabeldurchführungseinrichtung problemlos nicht nur gradlinig sondern auch um beispielsweise etwa 90° abgewinkelt werden. Trotz der gewissen Flexibilität der Kabel ist es ungünstig, diese nach dem Austritt aus der Einrichtung um 180° abzuwinkeln, damit sie in eine Richtung geführt werden, die ihrer Austrittsrichtung aus dem Kabelführungselement im wesentlichen entgegengesetzt ist, da sie dadurch Gefahr laufen, abgeknickt zu werden.

Der Erfindung liegt daher die zweite Aufgabe zugrunde, die Kabeldurchführungseinrichtung der eingangs genannten Art so zu verbessern, dass aus ihr austretende Kabel in einen Winkelraum von 360° geführt werden können.

Diese zweite Aufgabe wird durch die Merkmale des kennzeichnenden Teils des Patentanspruchs **5** gelöst, und die vorteilhafteste Weiterbildung ist durch den abhängigen Patentanspruch **6** definiert.

Eine in jeder Beziehung besonders vorteilhafte Kabeldurchführungseinrichtung gemäss Patentanspruch **7** umfasst die Merkmale der kennzeichnenden Teile sowohl des Patentanspruchs **1** wie auch des Patentanspruchs **5**.

Weitere vorteilhafte Ausbildungen der Kabeldurchführungseinrichtungen nach den Patentansprüchen **1**, **5** oder **7** sind durch die abhängigen Patentansprüche **8** bis **12** definiert.

Die Erste der erfindungsgemässen Kabeldurchführungseinrichtungen besitzt somit eine Abdeckung, die nach oben entfernbar ist, und zwar ohne dass vorher eine Doppelbodenplatte weggenommen werden muss, so dass die Zugänglichkeit zu den verlegten Kabeln und Anschlüssen in einfacher Weise gewährleistet ist. Damit die Abdeckung nicht unwillkürlich vom Rahmen entfernt wird, ist eine Sperrvorrichtung vorgesehen, mittels welcher sie lösbar am Rahmen befestigt ist.

Eine geeignete Sperrvorrichtung ist so ausgebildet, dass mindestens eine der Rahmenseitenwände einen Durchbruch aufweist, und dass die Abdeckung mindestens eine Klinke aufweist, welche in den Durchbruch einrastet. Die Klinke wird unter der Kraft einer Feder in den Durchbruch gedrückt und hält in eingerastetem Zustand die Abdeckung auf dem Rahmen fest. Um die Abdeckung wieder zu entfernen, muss die Klinke gegen die Kraft der Feder aus dem Durchbruch zurückgezogen werden. Dank der Klinke ist die Abdeckung fest mit dem Rahmen verbunden.

Am besten werden zwei Klinken angeordnet, und damit die Abdeckung mit einer Hand entfernt werden kann, ist es günstig, wenn die Betätigung der Klinken in entgegengesetzt gleicher Richtung, im Prinzip längs einer Wirkungslinie, erfolgt. Dies lässt sich werkzeugfrei bewerkstelligen.

Besonders vorteilhaft ist es, wenn, anders als bei der vorbekannten Kabeldurchführungseinrichtung, auch das Kabelführungselement von oben in den Rahmen eingebracht werden kann. Wird also beispielsweise ein neues Kabelführungselement benötigt, weil das vorhandene beschädigt oder Kabelbahnen mit anderen Abmessungen benötigt werden, so muss dazu nicht eine Doppelbodenplatte entfernt werden, während bei der vorbekannten Kabeldurchführungseinrichtung das Kabelführungselement nur seitlich, also nach Entfernung der

Die Zweite der erfindungsgemässen Kabeldurchführungseinrichtungen weist ein zusätzliches Kabelführungselement auf, das längs einer weiteren Rahmenseitenwand angeordnet ist. Dadurch vergrössert sich der Winkelraum, in welchen Kabel geführt werden können, ohne dass sie nahezu geknickt werden müssen, von etwa 180° auf rund 270°, wenn das zweite Kabelführungselement unter 90° zum ersten Kabelführungselement vorgesehen wird. Ein weitere Vorteil besteht darin, dass es möglich ist, bei gleicher Länge der Kabelführungselemente insgesamt mehr Kabelführungsbahnen vorzusehen.

Wenn die beiden Kabelführungselemente an zusammenstossenden Rahmenseitenwänden angeordnet sind, so vergrössert sich, wie erwähnt, der Winkelraum, in welchen die Kabel problemlos geführt werden können, auf ca. 270°; um Kabel problemlos in alle Richtungen zu führen und somit auf 360° zu verteilen, müssen die beiden Kabelführungselemente an einander gegenüberliegenden Rahmenseitenwänden angeordnet sein.

Damit eine Bewegung der Kabelführungselemente in ihrer Längsrichtung verhindern bzw. auf einen geringen Wert im Sinne eines Spiels begrenzt wird, ist es notwendig, geeignete Massnahmen zu treffen. Beispielsweise kann an der Rahmenseitenwand ein ins Innere des Rahmens ragender Nocken vorgesehen sein, welcher in eine entsprechende vertikale Ausnehmung im an die Rahmenseitenwand angrenzenden Bereich des Kabelführungselementes eingreift. Besonders günstig ist es, wenn die Kabelführungselemente so dimensioniert sind, dass die quer zu ihnen gerichteten Rahmenseitenwände als Anschläge für die Kabelführungselemente benutzt werden.

Wie bei der vorbekannten Kabeldurchführungseinrichtung sind die Rahmenseitenwände, an welchen Kabelführungselemente angeordnet sind, unten so abgekröpft, dass in der Horizontalen liegende und zum Rahmeninneren gerichtete Auflageleisten gebildet werden, auf welchen sich die Kabelführungselemente mit ihren unteren äusseren Randbereichen abstützen. Um in rationeller Weise Anschläge zu erhalten, welche eine Verschiebung der Kabelführungselemente auf die Rahmenmitte zu verhindern, ist es günstig, an den Aufnahmeleisten, welche auch Unterbrechungen aufweisen können, einen oder mehrere nach oben ragende Teile vorzusehen, welche in eine komplementäre vertikale Ausnehmung des jeweiligen Kabelführungselementes eingreifen kann. Dazu ist es möglich, entweder die gesamte Aufnahmeleiste abzukröpfen und eine in Längsrichtung durchgehende Ausnehmung mit einer dem Rahmeninnern zugewandten vertikalen Fläche im Kabelführungselement vorzusehen, oder an der Auflageleiste mindestens zwei schmale abgekröpfte Bereiche vorzusehen, welche entweder in eine durchgehende Ausnehmung oder in mehrere einzelne Ausnehmungen des Kabelführungselementes eingreifen, wobei sie im letzteren Fall auch eine Positionierung in Längsrichtung der Kabelführungselemente bewirken.

Besonders vorteilhaft ist es, den Rahmen quadratisch zu gestalten und die vier Rahmenseitenwände gleich auszubilden; der Rahmen kann dann in beliebiger Stellung eingebaut werden, und auch die Kabelführungskanäle können in verschiedenen Richtungen engesetzt werden.

Wie schon erwähnt, eignet sich als Material für den Rahmen und die Platte, durch welche die Abdeckung gebildet wird, insbesondere tiefziehbares, korrosionsbeständiges Metall, vorzugsweise Stahl. Die Platte kann zur Anpassung an den umgebenden Fussboden mit Teppich, Kunststoffbodenbelag oder einer Holzimitationsfolie bezogen werden.

Im folgenden wird die Erfindung anhand eines Ausführungsbeispieles und mit Bezug auf die Zeichnung näher erläutert. Es zeigen:
- **Fig. 1**: eine Kabeldurchführungseinrichtung nach der Erfindung, wobei ein Teil der Abdeckung weggelassen ist, in Draufsicht;
- **Fig. 2**: den Rahmen der in **Fig. 1** dargestellten Kabeldurchführungseinrichtung, ausschnittweise, in einem Schaubild;
- **Fig. 3A**: das in **Fig. 1** dargestellte Kabelführungselement, in einem Schaubild;
- **Fig. 3B**: das in den **Fig. 1** und **3A** dargestellte Kabelführungselement in einemSchnitt längs der Linie **IIIB-IIIB** der **Fig. 3A**;
- **Fig. 3C**: das in den **Fig. 1, 3A** und **3B** dargestellte Kabelführungselement in einer Ansicht mit Blick auf die Rückwand;
- **Fig. 4A**: die Platte der in **Fig. 1** dargestellten Abdeckung, in einem Schaubild;
- **Fig. 4B**: die in **Fig. 1** dargestellte Abdeckung, in einem Schnitt längs der Linie **IVB-IVB** in **Fig. 4A**; und
- **Fig. 4C**: die in den **Fig. 1** und **4B** dargestellte Abdeckung, in einem Schnitt längs der Linie **IVC-IVC** der **Fig. 4A**.

In der folgenden Beschreibung wird die Kabeldurchführungseinrichtung mit allen ihren Bestandteilen in diejenigen Stellung beschrieben, die sie nach einem Einbau in einer Ausnehmung eines Doppelbodens einnehmen wird.

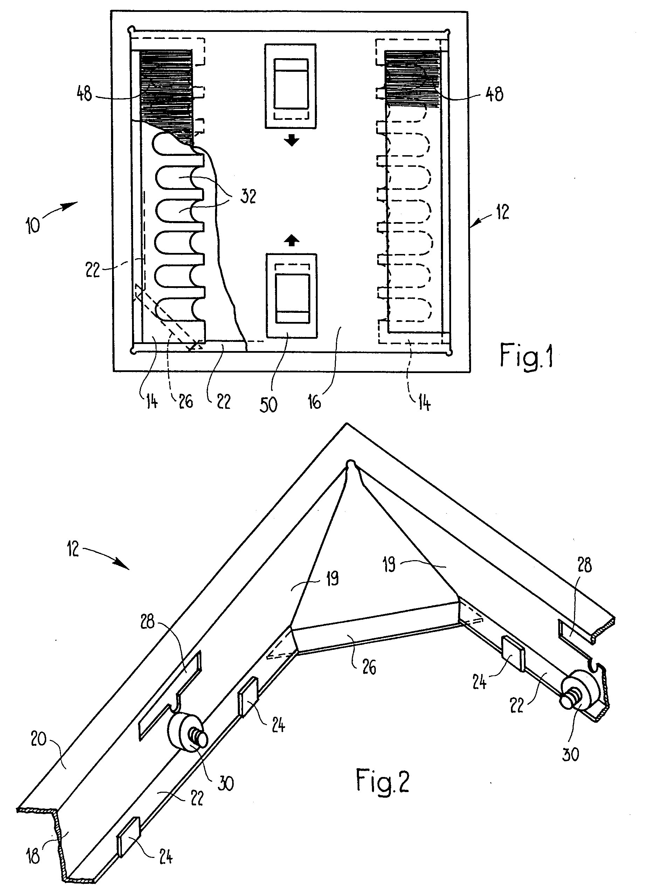

Gemäss **Fig. 1** besteht die Kabeldurchführungseinrichtung **10** aus einem Rahmen **12**, zwei Kabelführungselementen **14** und einer Abdeckung **16**.

Der Rahmen **12** ist in **Fig. 2** dargestellt und besteht aus einem vorzugsweise nicht oxydierenden, spanlos verformbaren Metall. Er ist quadratisch ausgebildet und weist vier vertikale Rahmenseitenwände **18** auf. Von den oberen Kanten der Rahmenseitenwände **18** gehen nach aussen ragende, horizontale Flansche **20** aus, die beim vorliegenden Ausführungsbeispiel durch Abkröpfungen der Rahmenseitenwände **18** gebildet sind, obwohl auch andere Herstellungsarten denkbar sind. Diese Flansche **20** sind dazu bestimmt, auf angrenzenden Bereichen einer oder mehrerer nicht dargestellter Doppelbodenplatte(n) aufzuliegen und gegenüber dem Bodenbelag der angrenzenden Doppelbodenplatten eine saubere Abdeckung zu bilden. Die Rahmenseitenwände **18** weisen nach unten aufeinander zulaufende Seitenkanten **19** auf, so dass sie sich nach unten verjüngen. Von ihren unteren Kanten gehen zum Inneren des Rahmens **10** gerichtete, horizontale Auflageleisten **22** aus, welche in gleicher Weise wie die Flansche **20** hergestellt sind. Die innere Endkante jeder Auflageleiste **22** weist zwei voneinander beabstandete, nach oben ragende Eingreifteile **24** auf. Jeweils zwei benachbarte seitliche Endbereiche der Auflageleisten **22** sind durch eine Verbindungsplatte **26** miteinander verbunden, welche die Stabilität des Rahmens **12** erhöht. Die Rahmenseitenwände **18** weisen je einen Durchbruch **28** auf, dessen Funktion weiter unten erklärt wird. Ferner ist jede Rahmenseitenwand **18** mittig mit einem ins Innere des Rahmens **10** ragenden Nocken **30**, im vorliegenden Ausführungsbeispiel in Form einer Anschweissmutter mit einem Gewindestift, bestückt; auch dessen Funktion wird weiter unten beschrieben.

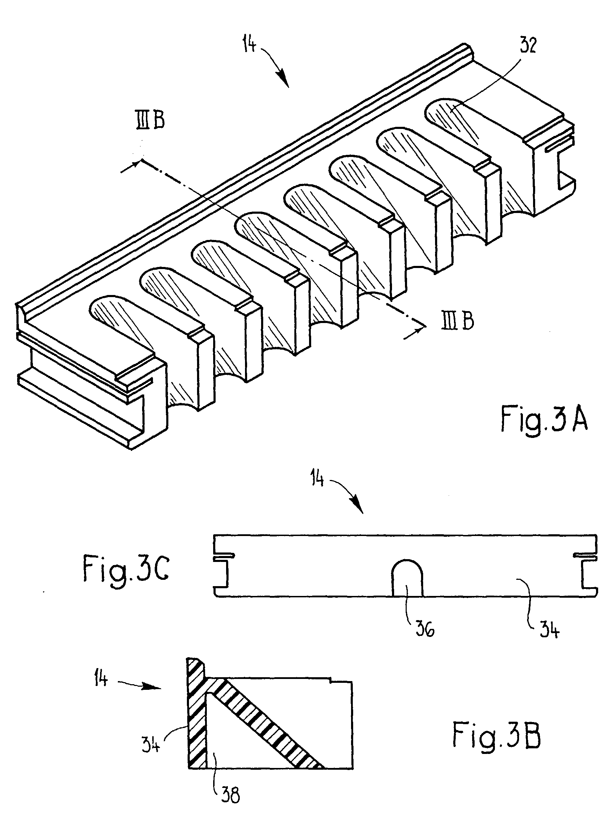

Die Kabelführungselemente **14**, von denen eines in **Fig. 3** dargestellt ist, bestehen vorzugsweise aus Kunststoff. Im vorliegenden Fall sind die beiden Kabelführungselemente **14** gleich ausgebildet und jedes Kabelführungselement **14** weist acht Kabelführungsbahnen **32** auf; es können aber auch in einem Rahmen verschiedene Kabelführungselemente verwendet werden, und bei entsprechender Ausbildung der Kabelführungselemente können diese auch an aneinanderstossenden Rahmenseitenwänden angeordnet sein. Die Kabelführungselemente **14** sind blockartig, jedoch mit zahlreichen Ausnehmungen, und werden von oben in den Rahmen **10** eingelegt, wo sie mit ihren vertikalen Rückwänden **34** an den benachbarten Rahmenseitenwänden **18** anlegen, während sie sich mit ihren unteren Flächen auf den Auflageleisten **22** abstützen. Die Länge der Kabelführungselemente **14** ist so gewählt, dass sie sich leicht zwischen einander gegenüberliegende Rahmenseitenwände **18** einschieben lassen. Die Kabelführungsbahnen **32** erstrecken sich schräg vom Inneren des Rahmens **10** nach oben etwa in Richtung auf die oberen Kanten der Rahmenseitenwände **18** zu. Jedes Kabelführungselement **14** weist in seiner an der benachbarten Rahmenseitenwand **18** anliegenden Rückwand **34** eine vom unteren Ende dieser Rückwand **34** ausgehende Ausnehmung **36** auf, in welche der Nocken **30** der Rahmenseitenwand **18** eingreift, um eine Verschiebung des Kabelführungselementes **14** in seiner Längsrichtung zu verhindern bzw. auf einen kleinen Wert in der Grössenordnung eines lockeren Spiels zu begrenzen. Statt durch die Ausnehmung **36** und den Nocken **30** kann man die Längsverschiebung des Kabelführungselementes **14** auch durch die einander gegenüberliegenden angrenzenden Rahmenseitenwände **18**, zwischen welchen das Kabelführungselement **14** eingelegt ist, verhindern bzw. begrenzen. Jedes Kabelführungselement **14** weist ferner einen sich in seiner Längsrichtung erstreckenden, vertikal nach oben gerichtete Ausnehmung **38** mit einer vertikalen, dem Rahmeninneren zugewandten Fläche auf, die von der Rückwand **34** des Kabelführungselementes **14** so weit entfernt ist, dass die Eingreifteile **24** des Rahmens **12** an der genannten Fläche in der Ausnehmung **38** zur Anlage gelangen. Auf diese Weise wird eine Verschiebung der Kabelführungselemente **14** in Richtung auf das Innere des Rahmens **12** verhindert. Anstelle der länglichen Ausnehmung **38** könnte auch pro Eingreifteil **24** nur eine kürzere Ausnehmung vorgesehen sein, wodurch sich dann der Nocken **30** und die Ausnehmung **36** als Längsanschläge erübrigen würden.

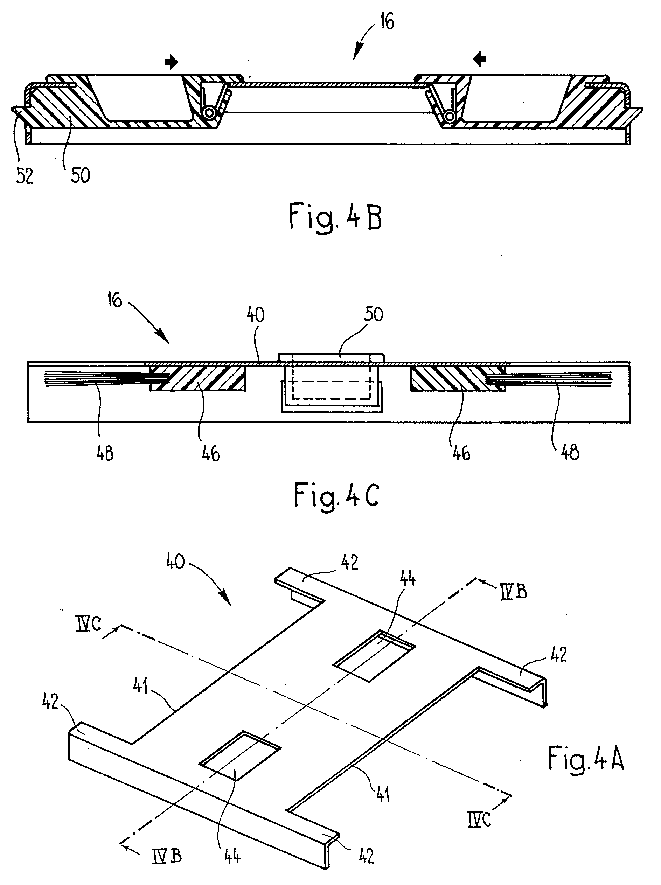

Die Abdeckung **16** ist in den **Fig. 4B** und **4C** dargestellt. Sie besteht im wesentlichen aus einer in **Fig. 4A** abgebildeten quadratischen Platte **40**, im vorliegenden Ausführungsbeispiel aus demselben Metall wie der Rahmen **12**, welche so bemessen ist, dass sie sich horizontal zwischen die Rahmenseitenwände **18** einlegen lässt, wo sie auf den Kabelführungselementen **14** aufliegt. Die Platte **40** weist von zwei einander gegenüberliegenden Seiten ausgehende Ausnehmungen **41** auf, die sich jedoch nicht über die ganze Seitenlänge erstrecken, so dass durch jede Ausnehmung **41** zwei Vorsprünge **42** gebildet werden, um eine stabile Auflage der Platte **40** zu gewährleisten. Ferner weist die Platte **40** zwei Durchbrüche **44** auf, deren Funktion weiter unten erklärt wird. An der unteren Fläche der Platte **40** ist gemäss **Fig. 4B** längs jeder Ausnehmungen **41** ein Borstenträger **46** befestigt, in welchem Borsten **48** aufgenommen sind, die dicht unter der Ausnehmung **42** horizontal in Richtung zur benachbarten Rahmenseitenwand **18** ragen. Dadurch wird die Ausnehmung **41** so überdeckt, dass Kabel problemlos durchgeführt werden können, selbst wenn sie mit Anschlussstücken versehen sind. Auf diese Weise wird eine Verschmutzung des Inneren der Kabeldurchführungseinrichtung **10** weitgehend verhindert. Damit die Abdeckung **16** sich nicht verschieben kann, wird sie gemäss **Fig. 4C** durch zwei Klinkenvorrichtungen **50** mit Klinken **52**, welche in die Durchbrüche **28** der Rahmenseitenwände **18** eingreifen, gehalten, wobei sich die Klinken **52** gegen die Kraft von Federn zurückziehen lassen. Die Klinkenvorrichtungen **50** sind in den Durchbrüchen **44** der Platten **40** montiert.

Die oben beschriebenen Kabeldurchführungseinrichtung bildet nur eines von zahlreichen möglichen Varianten, die im Rahmen der Erfindung liegen.

## Patentansprüche

1. Kabeldurchführungseinrichtung (**10**), welche in einen Ausschnitt eines Doppelbodens einsetzbar ist, mit
- einem rechteckigen Rahmen (**12**) mit vertikalen Rahmenseitenwänden (**18**), die oben auskragende Flansche (**20**) aufweisen, welche zur Auflage auf der Oberfläche des Doppelbodens bestimmt sind,
- einem in den Rahmen (**12**) eingesetzten, längs einer Rahmenseitenwand (**18**) angeordneten Kabelführungselement (**14**), das auf den Flansch (**20**) der angrenzenden Rahmenseitenwand (**18**) zulaufende Kabelführungsbahnen (**32**) aufweist, wobei mindestens die Rahmenseitenwand (**18**), längs welcher das Kabelführungselement (**14**) angeordnet ist, unten eine zum Inneren des Rahmens (**10**) gerichtete Auflageleiste (**22**) für das Kabelführungselement aufweist, und mit
- einer entfernbaren Abdeckung (**16**), welche sich bündig mit den Flanschen (**20**) zwischen den Rahmenseitenwänden (**18**) erstreckt und im Bereich der Kabelführungselemente (**14**) kabeldurchlässige Bereiche besitzt,
**dadurch gekennzeichnet,** dass die Abdeckung (**16**) von oben in den Rahmen (**12**) eingesetzt und mittels einer
Sperrvorrichtung befestigt ist.

2. Kabeldurchführungseinrichtung (**10**) nach Anspruch **1**,
**dadurch gekennzeichnet,**
dass die Sperrvorrichtung mindestens eine an der Abdeckung angeordnete, mittels einer Feder (**52**) vorgespannte Klinke (**50**) aufweist, welche in einen Durchbruch (**28**) an einer Rahmenseitenwand (**18**) hineinragt, wobei zur Entfernung der Abdeckung (**16**) die Klinke (**50**) gegen die Kraft der Feder (**52**) aus dem Durchbruch (**28**) entfernbar ist.

3. Kabeldurchführungseinrichtung (**10**) nach Patentanspruch **2**,
**dadurch gekennzeichnet,**
dass die Sperrvorrichtung zwei Klinken (**50**) umfasst, welche in entgegengesetzt gleicher Richtung betätigbar sind, damit die Abdeckung (**16**) einhändig und vorzugsweise werkzeugfrei entfernbar ist.

4. Kabeldurchführungseinrichtung (**10**) nach Patentanspruch **1**,
**dadurch gekennzeichnet,**
dass die Kabelführungselemente (**14**) parallel zu den Rahmenseitenwänden (**18**) aus dem Rahmen (**12**) entfernbar sind.

5. Kabeldurchführungseinrichtung (**10**), welche in einen Ausschnitt eines Doppelbodens einsetzbar ist, mit
- einem rechteckigen Rahmen (**12**) mit vertikalen Rahmenseitenwänden (**18**), die oben auskragende Flansche (**20**) aufweisen, welche zur Auflage auf der Oberfläche des Doppelbodens bestimmt sind,
- einem in den Rahmen (**12**) eingesetzten, längs einer Rahmenseitenwand (**18**) angeordneten Kabelführungselement (**14**), das auf den Flansch (**20**) der angrenzenden Rahmenseitenwand (**18**) zulaufende Kabelführungsbahnen (**32**) aufweist, wobei mindestens die Rahmenseitenwand (**18**), längs welcher das Kabelführungselement (**14**) angeordnet ist, unten eine zum Inneren des Rahmens (**10**) gerichtete Auflageleiste (**22**) für das Kabelführungselement aufweist, und mit
- einer entfernbaren Abdeckung (**16**), welche sich bündig mit den Flanschen (**20**) zwischen den Rahmenseitenwänden (**18**) erstreckt und im Bereich der Kabelführungselemente (**14**) kabeldurchlässige Bereiche besitzt.,
**dadurch gekennzeichnet,**
dass ein weiteres, längs einer weiteren Rahmenseitenwand (**18**) angeordnetes Kabelführungselement (**14**) vorgesehen ist.

6. Kabeldurchführungseinrichtung (**10**) nach Patentanspruch **5**,
**dadurch gekennzeichnet,**
dass das weitere Kabelführungselement (**14**) dem ersten Kabelführungselement (**14**) gegenüberliegend angeordnet ist.

7. Kabeldurchführungseinrichtung (**10**), welche in einen Ausschnitt eines Doppelbodens einsetzbar ist, mit
- einem rechteckigen Rahmen (**12**) mit vertikalen Rahmenseitenwänden (**18**), die oben auskragende Flansche (**20**) aufweisen, welche zur Auflage auf der Oberfläche des Doppelbodens bestimmt sind,
- einem in den Rahmen (**12**) eingesetzten, längs einer Rahmenseitenwand (**18**) angeordneten Kabelführungselement (**14**), das auf den Flansch (**20**) der angrenzenden Rahmenseitenwand (**18**) zulaufende Kabelführungsbahnen (**32**) aufweist, wobei mindestens die Rahmenseitenwand (**18**), längs welcher das Kabelführungselement (**14**) angeordnet ist, unten eine zum Inneren des Rahmens (**10**) gerichtete Auflageleiste (**22**) für das Kabelführungselement aufweist, und mit
- einer entfernbaren Abdeckung (**16**), welche sich bündig mit den Flanschen (**20**) zwischen den Rahmenseitenwänden (**18**) erstreckt und im Bereich der Kabelführungselemente (**14**) kabeldurchlässige Bereiche besitzt,
**dadurch gekennzeichnet,**
dass die Abdeckung (**16**) von oben in den Rahmen (**12**) eingesetzt und mittels einer Sperrvorrichtung befestigt ist, und dass ein weiteres, längs einer weiteren Rahmenseitenwand (**18**) angeordnetes Kabelführungselement vorgesehen ist.

8. Kabeldurchführungseinrichtung (**10**) nach einem der Patentansprüche **1, 5** oder **7**,
**dadurch gekennzeichnet,**
dass die an einem Kabelführungselement (**14**) anliegende Rahmenseitenwand (**18**) einen ins Innere des Rahmens (**10**) ragenden Nocken (**30**) aufweist, welcher in eine Ausnehmung (**36**) des angelegten Kabelführungselementes (**14**) eingreift, um eine Verschiebung des Kabelführungselementes (**14**) in seiner Längsrichtung zu verhindern.

9. Kabeldurchführungseinrichtung (**10**) nach einem der Patentansprüche **1, 5** oder **7**,
**dadurch gekennzeichnet,**
dass jede Auflageleiste (**22**) mindestens ein nach oben ragendes Eingriffsteil (**24**) besitzt, welches an einer dem Rahmeninneren zugewandten Fläche zur Anlage kommt oder in eine Ausnehmung (**38**) des Kabelführungselementes (**18**) ragt, um eine Bewegung des Kabelführungselementes (**18**) in Richtung auf das Innere des Rahmens (**10**) zu verhindern.

10. Kabeldurchführungseinrichtung (**10**) nach Patentansprüche **1, 5** oder **7**,
**dadurch gekennzeichnet,**
dass der Rahmen (**12**) quadratisch ist und dass vorzugsweise alle Rahmenseitenwände (**18**) gleich ausgebildet sind.

11. Kabeldurchführungseinrichtung (**10**) nach einem der Patentansprüche **1,5** oder **7**,
**dadurch gekennzeichnet,**
dass die Abdeckung (**16**) eine Platte (**40**) mit Ausnehmungen (**41**) oberhalb der Kabelführungselemente (**18**) ist, wobei die Ausnehmungen (**41**) durch an der Platte (**40**) befestigte Borsten (**48**) überdeckt sind.

12. Kabeldurchführungseinrichtung nach einem der Patentansprüche **1, 5** oder **7**,
**dadurch gekennzeichnet,**
dass der Rahmen (**12**) und die Platte (**40**) aus verformbarem, korrosionsbeständigem Metall, vorzugsweise aus Stahl, hergestellt sind.
